# EUROPEAN PATENT APPLICATION

(11) **EP 2 592 761 A1**
(43) Date of publication of application: **15.05.2013**
(21) Application number: 11803088.1
(22) Date of filing: 18.04.2011
(51) Int. Cl.: H04B 3/20, H04M 9/08

(54) **METHOD AND APPARATUS FOR CONTROLLING ECHO SUPPRESSION IN NETWORK**

(30) Priority: 09.07.2010 CN 201010225130
(71) Applicant: ZTE Corporation, Shenzhen, Guangdong 518057 (CN)
(72) Inventor: ZHENG, Yuxin, Shenzhen Guangdong 518057 (CN)
(74) Representative: Novagraaf Technologies
(86) International application number: PCT/CN2011/072963
(87) International publication number: WO 2012/003734

(57) **Abstract**

Disclosed in the present invention are a method and an apparatus for controlling echo canceller in a network. The method of the present invention comprises: a called side gateway detecting a characteristic tone used for indicating data transmission (S11); and the called side gateway and a calling side gateway executing a corresponding operation of switching on or off their own echo canceller according to the characteristic tone (S12). In the present invention, the calling side gateway or the called side gateway executes the operation of controlling echo canceller according to the characteristic tone, which can effectively control echo canceller. Regardless of the characteristic tone in the manner of loss coding or lossless coding, which is transmitted between the calling side gateway and the called side gateway, the calling side gateway can always control echo canceller.

## Description

### Field of the Invention

The present invention relates to the communication field and, in particular, to a method and an apparatus for controlling echo canceller in a network.

### Background of the Invention

The Next Generation Network (abbreviated as NGN) is a network based on the Internet Protocol (abbreviated as IP), and there are lots of voice coding algorithms. At present, the widely used voice coding standards include: G.711, G.729, G.723, G.726, etc. Various voice codecs (code/decode) are different in terms of compression ratio of the voice signal, occupied bandwidth and signal damage ratio. G.711, which is a lossless CODEC, is basically undamaging to the voice signal, so the transmitted voice quality is high, but the occupied bandwidth thereof is quite high (64 Kbps). G.729, in which the compression ratio of codec is relatively large, damages the voice signal to a certain extent, so the transmitted voice quality is relatively poor, but the occupied bandwidth thereof is relatively low, only 8 Kbps. For G.723, the occupied bandwidth is much lower, only 5.3 Kbps or 6.3 Kbps, but meanwhile there is a larger damage for the voice signal. As to general voice call, the voice quality of codec such as G.729, G.723, etc. is within the tolerance range of human, but the network bandwidth occupied by voice transmission is greatly reduced. Although G.711 is lossless codec, the voice quality thereof is quiet high, but the corresponding occupied bandwidth is also relatively high; in general, different codec algorithm will be applied in places according to the local network condition and requirements.

The current Public Switched Telephone Network (abbreviated as PSTN) has the characteristics of the transmission delay thereof being short, the transmission distortion of the line being small, etc, therefore, the voice quality thereof is quite high, and data services such as fax, MODEM, etc. is relatively stable. Since the requirement of fax and MODEM on the line signals is relatively high, the NGN network has to use G.711 codec when transmitting fax services or MODEM services transparently, at the same time, since the requirements of high speed and low speed of fax/MODEM services on the Echo Canceller (abbreviated as EC) in a gateway are different, the gateway needs to operate the ON and OFF of the EC function according to the signals of high/low speed fax services. The mostly used is Soft Switch (abbreviated as SS) full control mode, and the switching process of VOIP channel is controlled by SS.

However, if there is no SS control in the network, the gateway in calling side cannot control the ON or OFF of EC, causing that the fax function cannot be achieved normally

### Summary of the Invention

The present invention is to provide a method and an apparatus for controlling echo canceller in a network so as to at least solve the problem that if there is no SS control in the network, the gateway in calling side cannot control the ON or OFF of EC.

According to one aspect of the present invention, a method for controlling echo canceller in a network is provided, comprising: a called side gateway detecting a characteristic tone used for indicating data transmission; and the called side gateway and a calling side gateway executing a corresponding operation of switching on or off their own echo canceller according to the characteristic tone.

Preferably, the called side gateway detects the characteristic tone from a Public Switched Telephone Network (PSTN) switch connected thereto.

Preferably, the characteristic tone is an answer tone (ANS), an ANS with phase reversal (ANSBAR), an ANS with Amplitude Modulation (ANSAM), an ANS with Amplitude Modulation and phase reversal (ANSAMBAR) or a single tone of V.21 protocol.

Preferably, the process of executing a corresponding operation of switching on or off their own echo canceller according to the characteristic tone comprises: when the characteristic tone is ANS or V.21, executing an operation of switching on their own echo canceller; and when the characteristic tone is ANSBAR, executing an operation of switching off their own echo canceller.

Preferably, the method further comprises: the called side gateway transmitting the characteristic tone to the calling side gateway in the manner of lossless codec.

Preferably, the method further comprises: the called side gateway mapping the characteristic tone to gain an event number corresponding to the characteristic tone, and transmitting an event packet which includes the event number to the calling side gateway by using an RFC2833 request annotation protocol; and the calling side gateway parsing the event number, and mapping the characteristic tone corresponding to the event number.

According to another aspect of the present invention, an apparatus for controlling echo canceller in a network is provided, comprising: a detection module, configured to detect a characteristic tone used for indicating data transmission by a called side gateway; and a control module, configured to control the called side gateway and a calling side gateway to execute a corresponding operation of switching on or off their own echo canceller according to the characteristic tone.

Preferably, the control module comprises: a switch-on module, configured to execute an operation of switching on its own echo canceller when the characteristic tone is ANS or V.21; and a switch-off module, configured to execute an operation of switching off its own echo canceller when the characteristic tone is ANSBAR.

Preferably, the apparatus further comprises: a lossless codec module, configured to transmit the characteristic tone to the calling side gateway by the called side gateway in the manner of lossless codec.

Preferably, the apparatus further comprises: a mapping module, configured to map an event number corresponding to the characteristic tone by the called side gateway; a transmission module, configured to transmit an event packet which includes the event number to the calling side gateway by using the RFC2833 request annotation protocol; and a restoration module, configured to parse the event number by the calling side gateway, and to map the characteristic tone corresponding to the event number.

In the present invention, the calling side gateway or the called side gateway executes the operation of controlling echo canceller according to the characteristic tone, which can effectively control echo canceller. Regardless of the characteristic tone in the manner of loss coding or lossless coding, which is transmitted between the calling side gateway and the called side gateway, the calling side gateway can always control echo canceller.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a schematic diagram of network architecture applied according to various embodiments of the present invention;
Fig. 2 is a flowchart according to embodiment I of the present invention;
Fig. 3 is a schematic diagram of network architecture applied according to embodiment II of the present invention;
Fig. 4 is a flowchart according to embodiment II of the present invention;
Fig. 5 is a schematic diagram of network architecture applied according to embodiment III of the present invention;
Fig. 6 is a flowchart according to embodiment III of the present invention; and
Fig. 7 is a flowchart according to embodiment IV of the present invention.

### Detailed Description of Embodiments

The present invention will be described hereinafter in detail with reference to the accompanying drawings and in conjunction with embodiments. It needs to note that the embodiments of the present application and the features in the embodiments can be combined with each other if there is no conflict.

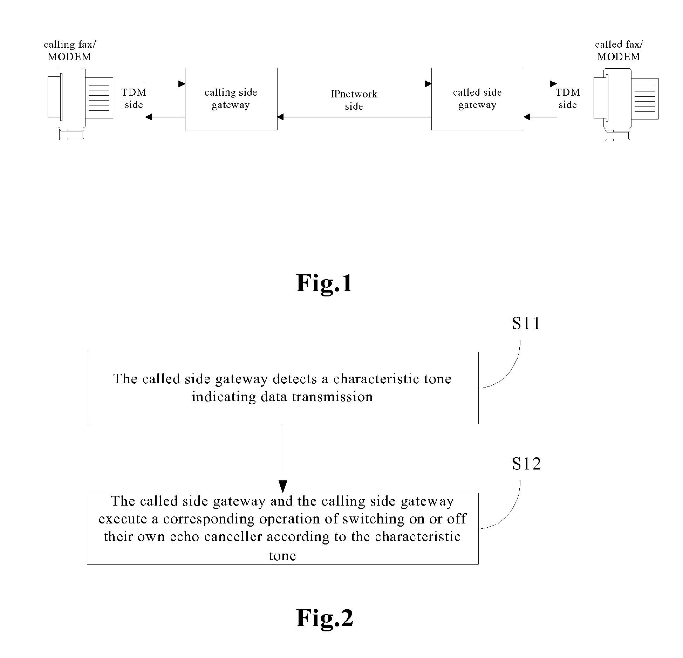

For describing various embodiments of the present invention clearly, various embodiments being applied in an NGN network is taken as an example for detailed description. Referring to the structure diagram of the NGN network shown in Fig. 1, it comprises:
a calling fax/modem (MODEM) device, a calling side gateway, a called side gateway and a called fax/MODEM device. The calling side gateway and the called side gateway are connected via an IP network, the calling side gateway is connected to the calling fax/MODEM device via an TDM side device, such as PSTN switch, and the called side gateway is connected to the called fax/MODEM device via an TDM side device.

Various embodiments of the present invention are applied in the network in Fig. 1, and hereinafter, various method embodiments of the present invention will be described in detail. Embodiment I will be first described. Fig. 2 is a flowchart according to embodiment I of the present invention. As shown in Fig. 2, this procedure comprises the following steps.

S11: the called side gateway detects a characteristic tone indicating data transmission.

The calling side fax/MODEM device initiates a data transmission request by the TDM side device, such as a fax service, and the request reaches the called side fax/MODEM device by passing through the calling side gateway, the called side gateway and the TDM side device orderly.

The called fax/MODEM device initiates a characteristic tone by the TDM side device, and the called side gateway detects the characteristic tone used for indicating data transmission.

S12: the called side gateway and the calling side gateway execute a corresponding operation of switching on or off their own echo canceller according to the characteristic tone.

After having detected the characteristic tone, the called side gateway and the calling side gateway may execute a corresponding operation of switching on or off the echo canceller according to the characteristic tone. For example, when the characteristic tone is an answer tone (ANS) or V.21, executing an operation of switching on their own echo canceller; and when the characteristic tone is an ANS with phase reversal (ANSBAR), executing an operation of switching off their own echo canceller.

In this case, the answer tone (ANS) is also named as called terminal identification (CED) tone, defined in the ITUT T.30 protocol, and is a 2100±15HZ tone. ANSBAR refers to a distortion signal of ANS, namely, carrying out phase reversal every 450ms based on the ANS signal. ANS with Amplitude Modulation (ANSAM) refers to increasing 15HZ amplitude modulation based on the ANS signal. ANS with Amplitude Modulation and phase reversal (ANSAMBAR) refers to increasing phase reversal every 450ms and 15HZ amplitude modulation based on an ANS signal. V.21 is also a signal tone of a fax machine defined in ITUT T.30 protocol.

In the above, embodiment I of the present invention is described in detail, Embodiment I of the present invention can be applied in a network without SS control, in which the called side gateway and the calling side gateway respectively control their own echo canceller. Since echo canceller is controlled during data transmission, fault can be avoided during data transmission.

For the solution of embodiment I, the called side gateway and the calling side gateway will have different interaction processes due to different network coding. Embodiments II and III will be taken for description hereinafter respectively.

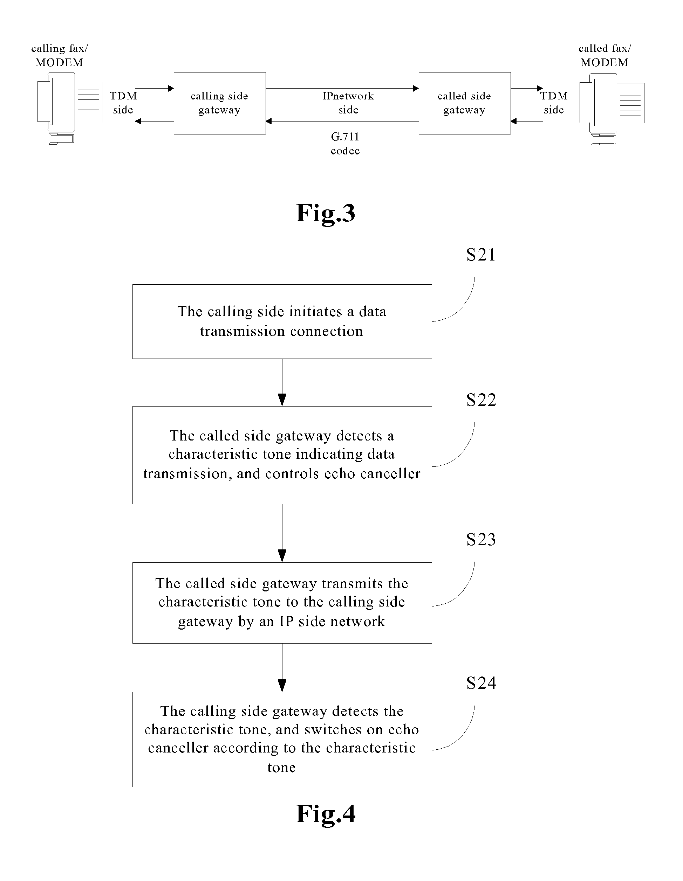

Referring to the schematic diagram of the network architecture shown in Fig. 3 and the flowchart shown in Fig. 4, embodiment II comprises the following steps.

S21: the calling side initiates a data transmission connection.
the calling side fax/MODEM device initiates a data transmission request by the TDM side device, such as a fax service, and the request reaches the called side fax/MODEM device by passing through the calling side gateway, the called side gateway and the TDM side device orderly.

S22: the called side gateway detects a characteristic tone indicating data transmission, and controls echo canceller.

After having received the data transmission connection of the calling side, the called fax/MODEM device initiates a characteristic tone by the TDM side device, wherein the TDM side device may be PSTN switch, etc., and the called side gateway detects the characteristic tone indicating data transmission. In this embodiment, the characteristic tone is an ANS characteristic tone. The called side gateway switches on echo canceller according to the ANS characteristic tone, and the operation of switching on echo canceller may also follow the subsequent step S23, which does not affect the implementation of the present invention.

S23: the called side gateway transmits the characteristic tone to the calling side gateway by an IP side network.

In this embodiment, the transmission between the called side gateway and the calling side gateway adopts lossless codec, such as G.711 codec, clear mode or other similar lossless codec, wherein G.711 is also referred to as G.711 A-law or G.711 µ-law.

S24: the calling side gateway detects the characteristic tone, and switches on echo canceller according to the characteristic tone.

After having detected the ANS characteristic tone, the calling side gateway switches on echo canceller.

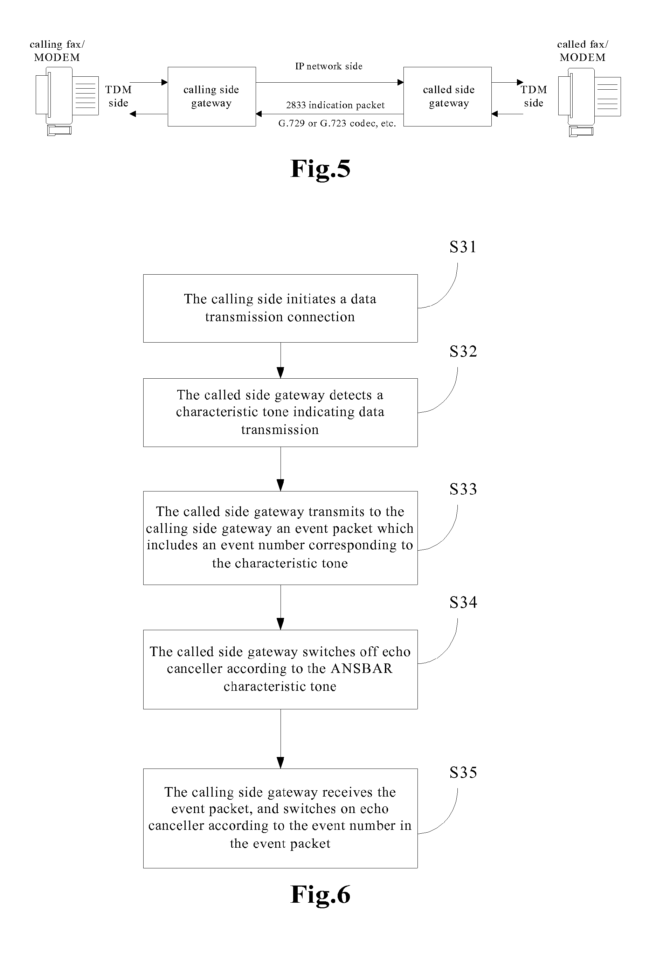

In the above embodiment II, the called side gateway directly sends the characteristic tone with lossless codec G.711, and the calling side gateway controls the startup of echo canceller by detecting the characteristic tone. In the above embodiment, sometimes, the transmission between the calling side gateway and the called side gateway also adopts loss codec mode, and at this moment, the calling side cannot detect the characteristic tone. For such case, the process of the calling side controlling echo canceller according to the characteristic tone will be described by embodiment III in detail hereinafter, referring to the schematic diagram of the network architecture shown in Fig. 5 and the flowchart shown in Fig. 6. Embodiment III includes the following steps.

S31: the calling side initiates a data transmission connection.

The calling side fax/MODEM device initiates a data transmission request by the TDM side device, such as a fax service, and the request reaches the called side fax/MODEM device by passing through the calling side gateway, the called side gateway and the TDM side device orderly.

S32: the called side gateway detects a characteristic tone indicating data transmission.

After having received the data transmission connection of the calling side, the called fax/MODEM device initiates a characteristic tone by the TDM side device, and the called side gateway detects the characteristic tone indicating data transmission. In this embodiment, the characteristic tone is an ANSBAR characteristic tone.

S33: the called side gateway transmits to the calling side gateway an event packet which includes an event number corresponding to the characteristic tone.

In this embodiment, the transmission between the calling side gateway and the called side gateway adopts loss codec, such as G.729, G.723 and all that coding modes. Due to the use of lossless codec, even the called side gateway sends the characteristic tone to the calling side gateway, the possibility for the calling side gateway to detect the characteristic tone is quite small. Based on this, the called side gateway maps the event number corresponding to the characteristic tone, and transmits the event packet including the event number to the calling side gateway by using the RFC2833 request annotation protocol; since the calling side gateway controls echo canceller according to the characteristic tone, the operation of switching on or off the characteristic tone can be directly mapped.

S34: the called side gateway switches off echo canceller according to the ANSBAR characteristic tone,

The called side gateway switches off echo canceller after having sent the event packet.

S35: the calling side gateway receives the event packet, and switches on echo canceller according to the event number in the event packet.

The calling side gateway parses the event number in the event packet and maps the characteristic tone corresponding to the event number or the execution operation corresponding to the event number.

After the mapped result is an ANSBAR characteristic tone according to the mapping relationship between a predetermined event number and the characteristic tone, the calling side gateway switches off echo canceller.

Preferably, after the mapped result is an operation to switch off echo canceller according to the mapping relationship between the preset event number and the execution operation, the calling side gateway switches off echo canceller.

Embodiments II and III of the present invention have been described in the above, and the operation process of controlling echo canceller by the calling side gateway according to the characteristic tone is also described, all of which can effectively control echo canceller.

Three method embodiments of the present invention have been described in detail in the above. Various method embodiments of the present invention can be integrated in a gateway in the form of various structures of integrated circuit, chips, etc. The apparatus structure of the present invention will be described in embodiment IV hereinafter.

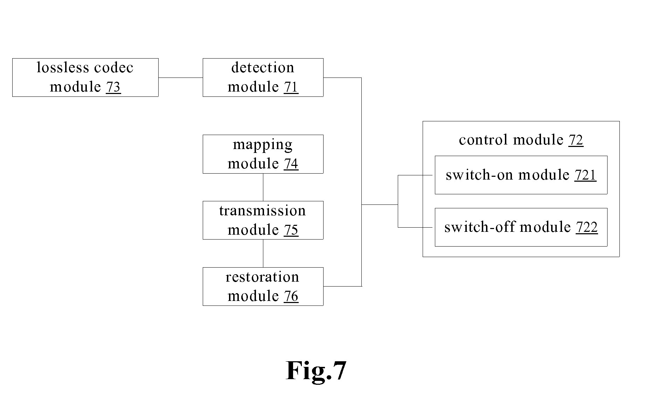

Referring to the structure diagram of embodiment IV shown in Fig. 7, the apparatus comprises:
a detection module **71,** configured to detect a characteristic tone used for indicating data transmission by a called side gateway; and
a control module **72,** configured to control the called side gateway and a calling side gateway to execute a corresponding operation of switching on or off their own echo canceller according to the characteristic tone.

Preferably, the control module **72** comprises:
a switch-on module **721,** configured to execute an operation of switching on its own echo canceller when the characteristic tone is ANS or V.21; and
a switch-off module **722,** configured to execute an operation of switching off its own echo canceller when the characteristic tone is ANSBAR.

Preferably, the apparatus comprises:
a lossless codec module **73,** configured to transmit the characteristic tone to the calling side gateway by the called side gateway in the manner of lossless codec.

Preferably, the apparatus comprises:
a mapping module **74,** configured to map an event number corresponding to the characteristic tone by the called side gateway;
a transmission module **75,** configured to transmit an event packet which includes the event number to the calling side gateway by using the RFC2833 request annotation protocol; and
a restoration module **76,** configured to parse the event number by the calling side gateway, and to map the characteristic tone corresponding to the event number.

The apparatus structure and the functions of various modules in embodiment IV have been described in detail in the above, and the step procedures in the above three method embodiments of the present invention can be implemented by various modules in the apparatus embodiments of the present invention.

The method and the apparatus of the present invention can be applied in various data service networks, such as NGN network.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, moreover, in some situation, they can be executed the showed or described steps in an order different from this illustrated therein, or they are made into integrated circuit module respectively, or a plurality of modules or steps thereof are made into one integrated circuit module. In this way, the present invention is not restricted to any particular hardware and software combination

Above description is only to illustrate the preferred embodiments but not to limit the present invention. Various alternations and changes to the present invention are apparent to those skilled in the art. The scope defined in claims shall comprise cover any medication, equivalent substitution and improvement within the principle of the present invention.

## Claims

1. A method for controlling echo canceller in a network, **characterized by** comprising:
a called side gateway detecting a characteristic tone used for indicating data transmission; and
the called side gateway and a calling side gateway executing a corresponding operation of switching on or off their own echo canceller according to the characteristic tone.

2. The method according to Claim 1, **characterized in that** the called side gateway detects the characteristic tone from a Public Switched Telephone Network (PSTN) switch connected thereto.

3. The method according to Claim 2, **characterized in that** the characteristic tone is an answer tone (ANS), an ANS with phase reversal (ANSBAR), an ANS with Amplitude Modulation (ANSAM), an ANS with Amplitude Modulation and phase reversal (ANSAMBAR) or a single tone of V.21 protocol.

4. The method according to Claim 3, **characterized in that** the process of executing a corresponding operation of switching on or off their own echo canceller according to the characteristic tone comprises:
when the characteristic tone is ANS or V.21, executing an operation of switching on their own echo canceller; and
when the characteristic tone is ANSBAR, executing an operation of switching off their own echo canceller.

5. The method as claimed in claim 1 or 4, **characterized by** further comprising:
the called side gateway transmitting the characteristic tone to the calling side gateway in the manner of lossless codec.

6. The method as claimed in claim 1 or 4, **characterized by** further comprising:
the called side gateway mapping an event number corresponding to the characteristic tone, and transmitting an event packet which includes the event number to the calling side gateway by using an RFC2833 request annotation protocol; and
the calling side gateway parsing the event number, and mapping the characteristic tone corresponding to the event number.

7. An apparatus for controlling echo canceller in a network, **characterized by** comprising:
a detection module, configured to detect a characteristic tone used for indicating data transmission by a called side gateway; and
a control module, configured to control the called side gateway and a calling side gateway to execute a corresponding operation of switching on or off their own echo canceller according to the characteristic tone.

8. The apparatus according to Claim 7, **characterized in that** the control module comprises:
a switch-on module, configured to execute an operation of switching on its own echo canceller when the characteristic tone is ANS or V.21; and
a switch-off module, configured to execute an operation of switching off its own echo canceller when the characteristic tone is ANSBAR.

9. The apparatus according to Claim 7, **characterized by** further comprising:
a lossless codec module, configured to transmit the characteristic tone to the calling side gateway by the called side gateway in the manner of lossless codec.

10. The apparatus according to Claim 9, **characterized by** further comprising:
a mapping module, configured to map an event number corresponding to the characteristic tone by the called side gateway;
a transmission module, configured to transmit an event packet which includes the event number to the calling side gateway by using the RFC2833 request annotation protocol; and
a restoration module, configured to parse the event number by the calling side gateway, and to map the characteristic tone corresponding to the event number.
